(19) Europäisches Patentamt / European Patent Office / Office européen des brevets

(11) **EP 2 851 252 B1**

(12) **EUROPEAN PATENT SPECIFICATION**

(45) Date of publication and mention
of the grant of the patent:
**03.01.2018  Bulletin 2018/01**

(51) Int Cl.:
*B60W 10/06* (2006.01)    *F16H 61/02* (2006.01)
*F16H 61/662* (2006.01)   *F02D 41/12* (2006.01)
*F02D 31/00* (2006.01)    *B60W 30/19* (2012.01)
*B60W 30/188* (2012.01)   *B60W 10/107* (2012.01)
*F02D 41/00* (2006.01)

(21) Application number: **13790069.2**

(22) Date of filing: **17.05.2013**

(86) International application number:
**PCT/JP2013/063841**

(87) International publication number:
**WO 2013/172458 (21.11.2013 Gazette 2013/47)**

(54) **VEHICLE CONTROL DEVICE, VEHICLE CONTROL METHOD, AND SADDLE-RIDE-TYPE VEHICLE**

FAHRZEUGSTEUERUNGSVORRICHTUNG, FAHRZEUGSTEUERUNGSVERFAHREN UND SATTELARTIGES FAHRZEUG

DISPOSITIF DE COMMANDE DE VÉHICULE, PROCÉDÉ DE COMMANDE DE VÉHICULE ET VÉHICULE À MONTURE À SELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **18.05.2012  JP 2012115113**

(43) Date of publication of application:
**25.03.2015  Bulletin 2015/13**

(73) Proprietor: **Yamaha Hatsudoki Kabushiki Kaisha**
**Iwata-shi, Shizuoka 438-8501 (JP)**

(72) Inventor: **ISHIOKA, Kazutoshi**
**Iwata-shi**
**Shizuoka 438-8501 (JP)**

(74) Representative: **Grünecker Patent- und Rechtsanwälte**
**PartG mbB**
**Leopoldstraße 4**
**80802 München (DE)**

(56) References cited:
JP-A- 2004 346 782    JP-A- 2007 046 488
JP-A- 2008 286 167    US-A- 6 148 257
US-A- 6 155 954

## Description

Technical Field

The present invention relates to a vehicle control device, a vehicle control method, and a saddle-ride type vehicle, and more particularly, to a technology for controlling a gear ratio of a continuously variable transmission and an opening degree of a throttle valve.

Background Art

Hitherto, there has been known a vehicle control device for controlling a gear ratio of a continuously variable transmission and an opening degree of a throttle valve (throttle opening degree) (for example, JP 3754188 B, see also US 6 148 257 A. In the related-art control, first, a required drive force is calculated based on a vehicle speed and an amount of accelerator operation by a driver (accelerator operation amount). Then, a target speed of revolutions of an engine (hereinafter referred to as "target engine revolution speed") and a target throttle opening degree are calculated so as to achieve the required drive force. As the target engine revolution speed, the speed of revolutions for achieving the best fuel efficiency is set.

Summary of Invention

Technical Problem

A motorcycle is more significantly affected in terms of ride comfort by the speed of revolutions of the engine (hereinafter referred to as "engine revolution speed") as compared to a four-wheeled automobile. Therefore, there is a demand for setting the engine revolution speed to the speed of revolutions for achieving a comfortable ride. However, in the related-art control, the speed of revolutions for achieving the best fuel efficiency is set as the target engine revolution speed, and hence it is difficult to set the engine revolution speed to the speed of revolutions for achieving a comfortable ride. That is, in the related-art control, the engine revolution speed is not always set to the speed of revolutions that matches with the accelerator operation by the driver.

Further, it is desired that fuel efficient control be carried out in the motorcycle similarly to the four-wheeled automobile. In general, fuel efficient running is achieved by decreasing the engine revolution speed. Further, when engine torque is sufficiently low, the fuel efficient running can be achieved even by interrupting fuel supply to an engine. However, if the fuel supply is interrupted when the throttle is still open, the engine torque may drastically vary.

The present invention has an object to provide a vehicle control device, a vehicle control method, and a saddle-ride type vehicle, which are capable of setting the engine revolution speed to the speed of revolutions for achieving a comfortable ride, and capable of improving the fuel efficiency while suppressing drastic variation of the engine torque.

Solution to Problem

In order to solve the above-mentioned problem, according to the present invention, there is provided a vehicle control device for controlling a gear ratio of a continuously variable transmission and a throttle opening degree, the vehicle control device including a basic engine revolution speed calculation unit, a target engine revolution speed calculation unit, a target gear ratio calculation unit, a basic engine torque calculation unit, a target throttle opening degree calculation unit, and an interruption instruction signal outputting unit. The basic engine revolution speed calculation unit calculates a basic engine revolution speed based on an accelerator operation amount and a vehicle speed. The target engine revolution speed calculation unit calculates a target engine revolution speed based on the basic engine revolution speed. Further, the target engine revolution speed calculation unit switches the target engine revolution speed between a value equal to the basic engine revolution speed and a value smaller than the basic engine revolution speed. The target gear ratio calculation unit calculates a target gear ratio based on the target engine revolution speed. The basic engine torque calculation unit calculates a basic engine torque based on an accelerator operation amount and the basic engine revolution speed. The target throttle opening degree calculation unit calculates a target throttle opening degree based on the basic engine torque and the target engine revolution speed. Further, the target throttle opening degree calculation unit reduces the target throttle opening degree after the target engine revolution speed is switched to the value smaller than the basic engine revolution speed. The interruption instruction signal outputting unit outputs an interruption instruction signal for instruction of interruption of fuel supply to an engine after the target throttle opening degree reaches 0.

Further, according to the present invention, there is provided a vehicle control method for controlling a gear ratio of a continuously variable transmission and a throttle opening degree, the method including a basic engine revolution speed calculation step, a target engine revolution speed calculation step, a target gear ratio calculation step, a basic engine torque calculation step, a target throttle opening degree calculation step, and an interruption instruction signaloutputting step. In the basic engine revolution speed calculation step, a basic engine revolution speed is calculated based on an accelerator operation amount and a vehicle speed. In the target engine revolution speed calculation step, a target engine revolution speed is calculated based on the basic engine revolution speed, and the target engine revolution speed is switched between a value equal to the basic engine revolution speed and a value smaller than the basic engine revolution speed. In the target gear ratio calculation step, a target gear ratio is calculated based on the target engine revolution speed. In the basic engine torque calculation step, a basic engine torque is calculated based on an accelerator operation amount and the basic engine revolution speed. In the target throttle opening degree calculation step, a target throttle opening degree is calculated based on the basic engine torque and the target engine revolution speed, and the target throttle opening degree is reduced after the target engine revolution speed is switched to the value smaller than the basic engine revolution speed. In the interruption instruction signal outputting step, an interruption instruction signal for instruction of interruption of fuel supply to an engine is output after the target throttle opening degree reaches 0.

Further, according to one embodiment of the present invention, there is provided a saddle-ride type vehicle, including the above-mentioned vehicle control device according to one embodiment of the present invention.


Advantageous Effects of Invention

According to one embodiment of the present invention, the target engine revolution speed is calculated, and the target engine torque and the target throttle opening degree are calculated based on this target engine revolution speed. Further, the instruction of the interruption of the fuel supply to the engine is given after the target throttle opening degree reaches 0, and hence the fuel efficiency can be improved while suppressing drastic variation of the engine torque.

Note that, the target engine revolution speed is calculated with use of a map that associates the accelerator operation amount with the engine revolution speed, for example. This map may be not only a map that directly associates the accelerator operation amount with the engine revolution speed, but also a map that indirectly associates the accelerator operation amount with the engine revolution speed. That is, the map may include a map that associates the accelerator operation amount with the throttle opening degree, and a map that associates this throttle opening degree with the engine revolution speed.


Brief Description of Drawings

FIG. 1 is a side view of a saddle-ride type vehicle according to an embodiment of the present invention.

FIG. 2 is a functional block diagram of the saddle-ride type vehicle according to the embodiment of the present invention.

FIG. 3 is a control block diagram illustrating control to be achieved by a control device.

FIG. 4 is a graph showing an example of an engine revolution speed map.

FIG. 5 is a graph showing an example of an engine torque map.

FIG. 6 is a diagram illustrating an example of a control block of a conversion unit.

FIG. 7 is a diagram illustrating an example of a control block of a reverse conversion unit.

FIG. 8 is a graph showing a relationship between an engine revolution speed and engine torque at a certain throttle opening degree.

FIG. 9 is a graph showing a relationship between a drive state value and an upper limit value of a correction amount determined based on the drive state value.

FIG. 10 shows an example of a map for determining a first load coefficient L1 based on an accelerator operation amount and a vehicle speed.

FIG. 11 is shows an example of a map for determining a second load coefficient L2 based on an accelerator operation amount change rate.

FIG. 12 shows an example of a map for determining a third load coefficient L3 based on a vehicle speed and acceleration.

FIG. 13 shows an example of a map for determining a lower limit engine revolution speed with respect to a vehicle speed.

FIG. 14 is a block diagram illustrating the function of the control device according to a modified example.

FIG. 15 is a flow chart illustrating the operation of the control device according to the modified example. 7

FIG. 16 is a graph showing the function and operation of the control device according to the modified example.

Description of Embodiments

Now, an embodiment of the present invention is described with reference to the drawings.

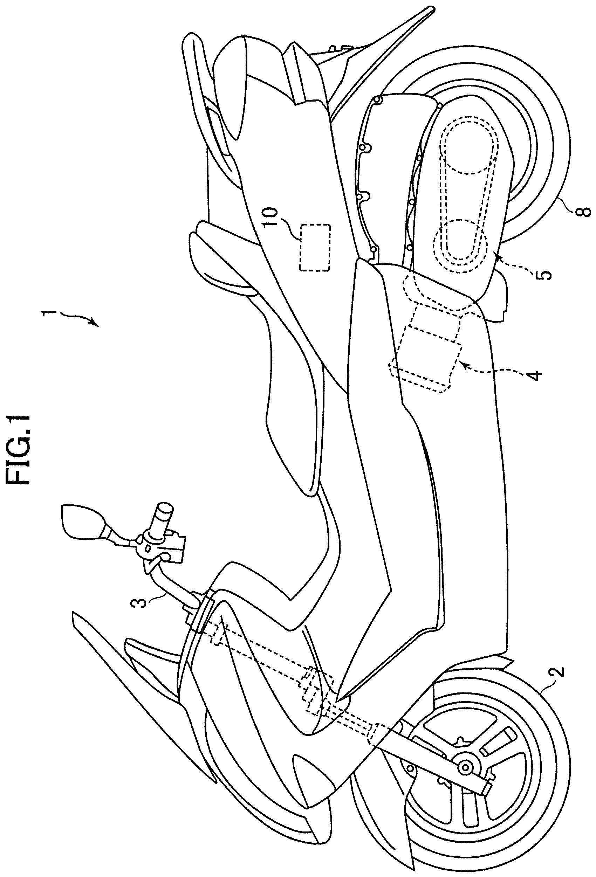

FIG. 1 is a side view of a saddle-ride type vehicle 1 according to the embodiment of the present invention. The saddle-ride type vehicle herein refers to an automotive vehicle including a saddle on which an occupant sits astride, and examples thereof include a motorcycle, a motor tricycle, a three-wheeled or four-wheeled buggy called an all terrain vehicle (ATV), and a snowmobile. In this embodiment, a motorcycle is exemplified as the saddle-ride type vehicle 1, but the motorcycle is represented as an example of the saddle-ride type vehicle 1.

The saddle-ride type vehicle 1 includes, as illustrated in FIG. 1, a front wheel 2 and a steering handle 3 for steering the front wheel 2. A right grip of the steering handle 3 is an accelerator grip (invisible in FIG. 1), and when an occupant operates the accelerator grip for rotation, an accelerator operation amount, which is the operation amount of the accelerator grip, is detected by an accelerator sensor provided to the accelerator grip.

Further, rotational power generated by an engine 4 is transmitted via an electronically controlled continuously variable transmission 5 to a rear wheel 8 serving as a drive wheel. On the downstream of the electronically controlled continuously variable transmission 5, a clutch and a final reduction mechanism (both not shown) are arranged between the electronically controlled continuously variable transmission 5 and the rear wheel 8.

The engine 4 is a general reciprocating engine, and the form thereof, for example, whether the engine 4 is a two-stroke engine or a four-stroke engine, or the number of cylinders is not particularly limited. Further, the engine 4 includes an electronically controlled throttle valve, and its intake amount is controlled based on the instruction from a control device 10 to be described later.

Further, the electronically controlled continuously variable transmission 5 includes an input shaft that interlocks with a crankshaft of the engine 4, and an output shaft. The electronically controlled continuously variable transmission 5 continuously changes the gear ratio of the output shaft with respect to the input shaft based on the instruction from the control device 10 to be described later. The form of the electronically controlled continuously variable transmission 5 is not particularly limited, but this embodiment employs a form in which a V-belt is looped around a drive pulley arranged on the input shaft and a driven pulley arranged on the output shaft. A continuously variable transmission actuator axially moves one of two sheaves constructing the drive pulley to change an apparent diameter in which the V-belt and the drive pulley engage with each other, and controls the gear ratio along therewith.

The control device 10 is a device for controlling the operation of the entire saddle-ride type vehicle 1, and may be constructed of a general computer including a central processing unit (CPU) and a memory, or an electronic circuit such as a so-called microcontroller or a digital signal processor (DSP). The control device 10 sends instructions to the above-mentioned electronically controlled throttle valve and continuously variable transmission actuator, and inputs signals from respective sensors as described later. A substrate having the control device 10 mounted thereon is arranged at an appropriate position of a vehicle body of the saddle-ride type vehicle 1.

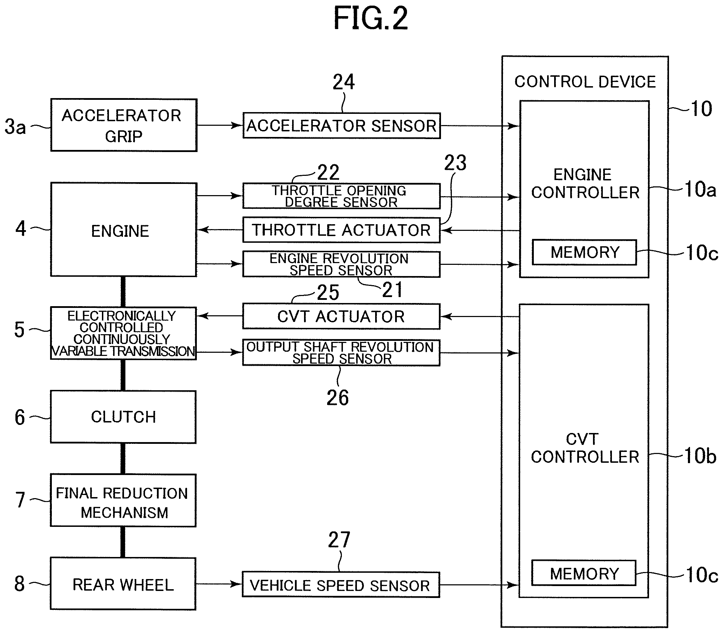

FIG. 2 is a functional block diagram of the saddle-ride type vehicle 1 according to this embodiment. In a torque transmission path from the engine 4 to the rear wheel 8, the electronically controlled continuously variable transmission 5, a clutch 6, and a final reduction mechanism 7 are sequentially arranged. Further, an accelerator operation amount, a throttle opening degree, an engine revolution speed, an output shaft revolution speed, and a vehicle speed are input to the control device 10. The accelerator operation amount is an output signal from an accelerator sensor 24 provided to the steering handle 3 (see FIG. 1), for detecting the operation amount of an accelerator grip 3a. The throttle opening degree is an output signal from a throttle opening degree sensor 22 provided to the engine 4, for detecting the opening degree of the electronically controlled throttle valve. The engine revolution speed is an output signal from an engine revolution speed sensor 21 provided to the engine 4, for detecting the speed of revolutions of the crankshaft. The output shaft revolution speed is an output signal from an output shaft revolution speed sensor 26 provided to the electronically controlled continuously variable transmission 5, for detecting the speed of revolutions of the output shaft of the electronically controlled continuously variable transmission 5. The vehicle speed is an output signal from a vehicle speed sensor 27 provided to an axle of the rear wheel 8, for detecting the vehicle speed of the saddle-ride type vehicle 1. Further, the control device 10 sends an instruction to a throttle actuator 23 to control the opening degree of the electronically controlled throttle valve provided to the engine 4. Further, the control device 10 sends an instruction to a CVT actuator 25 to control the gear ratio of the electronically controlled continuously variable transmission 5.

Note that, the control device 10 in this embodiment includes an engine controller 10a and a CVT controller 10b. The engine controller 10a and the CVT controller 10b are each constructed of an independent integrated circuit. Then, the accelerator operation amount, the throttle opening degree, and the engine revolution speed are input to the engine controller 10a, and the output shaft revolution speed and the vehicle speed are input to the CVT controller 10b. The engine controller 10a and the CVT controller 10b can be communicated with each other. With this configuration, for example, the CVT controller 10b can receive the accelerator operation amount, the throttle opening degree, the engine revolution speed, and the result of calculation by the engine controller 10a. Similarly, the engine controller 10a can receive the output shaft revolution speed, the vehicle speed, and the result of calculation by the CVT controller 10b.

Further, the engine controller 10a and the CVT controller 10b each include a memory 10c, which stores computer programs to be executed by the engine controller 10a or the CVT controller 10b, and various data such as parameters, tables, and maps to be used for control of the saddle-ride type vehicle 1. Note that, the configuration of the control device 10 is merely an example, and any circuit configuration may be employed as long as similar functions can be achieved. For example, the control device 10 may be achieved by a single integrated circuit.

Subsequently, the control of the saddle-ride type vehicle 1 to be achieved by the control device 10 is described.

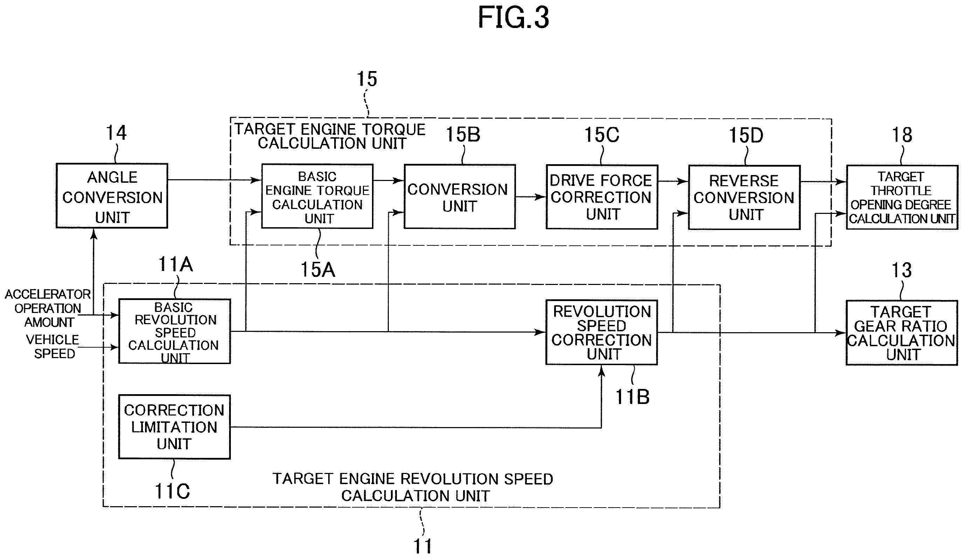

FIG. 3 is a control block diagram illustrating the control to be achieved by the control device 10. Note that, the control described herein is only required to be achieved by the entire control device 10, and whether the individual control blocks are achieved by the above-mentioned engine controller 10a or CVT controller 10b is arbitrary. Further, the individual control blocks may be achieved by a physical electrical circuit, but, in this embodiment, the individual control blocks are virtually achieved by software executed on the engine controller 10a or the CVT controller 10b.

First, description is made of basic control of determining, based on the accelerator operation amount and the vehicle speed, a target throttle opening degree and a target gear ratio that correspond to instruction values to the throttle actuator 23 and the CVT actuator 25 (or converted values thereof) . Note that, the target throttle opening degree is an opening degree of the electronically controlled throttle valve to be achieved by the control, and the target gear ratio is a gear ratio of the electronically controlled continuously variable transmission 5 to be achieved by the control.

First, the processing for obtaining the target gear ratio is described. The control device 10 includes a target engine revolution speed calculation unit 11 and a target gear ratio calculation unit 13 illustrated in FIG. 3. Further, the target engine revolution speed calculation unit 11 includes a basic revolution speed calculation unit 11A, a revolution speed correction unit 11B, and a correction limitation unit 11C. The control device 10 repeatedly executes processing executed by those control blocks at a predefined cycle.

The basic revolution speed calculation unit 11A calculates a basic engine revolution speed based on the accelerator operation amount detected by the accelerator sensor 24 and the vehicle speed. The basic engine revolution speed herein refers to a target value of the speed of revolutions of the crankshaft of the engine 4, which is uniquely obtained through conversion based on information relating to the accelerator operation amount and information relating to the vehicle speed, and refers to a value not corrected by the revolution speed correction unit 11B to be described later. Note that, the information relating to the accelerator operation amount herein refers to information having one-to-one correspondence with the accelerator operation amount through appropriate conversion, and the information relating to the vehicle speed herein refers to information having one-to-one correspondence with the accelerator operation amount through appropriate conversion. For example, the speed of revolutions of the rear wheel 8 is converted into the vehicle speed through multiplication by the perimeter of the rear wheel 8, and hence the speed of revolutions of the rear wheel 8 is the information relating to the vehicle speed. In this embodiment, the accelerator operation amount and the vehicle speed are used as the information relating to the accelerator operation amount and the information relating to the vehicle speed, respectively, but other information may be used if the pieces of information correspond to the information relating to the accelerator operation amount and the information relating to the vehicle speed.

The memory 10c stores a map that associates the accelerator operation amount and the vehicle speed with the engine revolution speed (hereinafter referred to as "engine revolution speed map"). The basic revolution speed calculation unit 11A refers to the engine revolution speed map to calculate the engine revolution speed corresponding to the accelerator operation amount and the vehicle speed, and sets the engine revolution speed as the basic engine revolution speed.

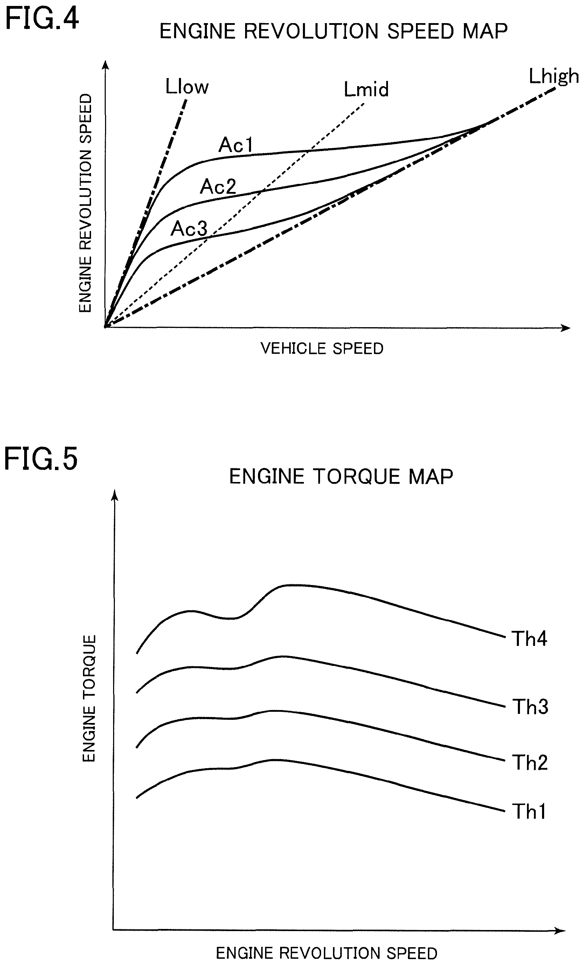

FIG. 4 is a graph showing an example of the engine revolution speed map. The memory 10c stores data obtained by quantifying the map. In the engine revolution speed map shown in FIG. 4, the horizontal axis represents a vehicle speed, and the vertical axis represents an engine revolution speed. FIG. 4 exemplifies curves Ac1 to Ac3 that correspond to respective accelerator operation amounts. In this case, the curves Ac1 to Ac3 have correspondence to specific accelerator operation amounts. For example, the curve Ac1 is selected under a specific state in which the accelerator operation amount is large, the curve Ac3 is selected under a specific state in which the accelerator operation amount is small, and the curve Ac2 is selected under an intermediate state. Note that, a larger number of curves than those shown in FIG. 4 are actually prepared so as to support finer changes of the accelerator operation amount.

In this case, when a curve corresponding to a certain accelerator operation amount, as an example, the curve Ac1 is selected, the engine revolution speed is determined based on the vehicle speed at that time point. As is understood from FIG. 4, even at the same vehicle speed, the curve to be selected differs when the accelerator operation amount is small (the curve on the lower side is selected in FIG. 4), and a smaller engine revolution speed is obtained.

Note that, in the engine revolution speedmap, a straight line passing through the origin represents a state in which the gear ratio is constant. The straight line indicated by Llow in FIG. 4 represents a low gear state in which the gear ratio of the electronically controlled continuously variable transmission 5 is the largest, the straight line indicated by Lhigh represents a high gear state in which the gear ratio of the electronically controlled continuously variable transmission 5 is the smallest, and the straight line indicated by Lmid represents an intermediate gear state therebetween. As is read from FIG. 4, in each of the curves in this example, the engine revolution speed is raised along the straight line Llow (low gear state) while the vehicle speed is small, the engine revolution speed is gently raised when the vehicle speed takes an intermediate value, and the engine revolution speed is raised along the straight line Lhigh (high gear state) when the vehicle speed is large.

The basic engine revolution speed obtained by the basic revolution speed calculation unit 11A is passed to the revolution speed correction unit 11B. The revolution speed correction unit 11B is a unit configured to perform processing of subjecting the basic engine revolution speed to appropriate correction in order to achieve fuel efficient running. The target engine revolution speed is obtained by subjecting the basic engine revolution speed to such correction. In this case, the target engine revolution speed is a target value to be controlled as a rotational speed of the crankshaft of the engine 4. At this time, as described above, with control considering only the fuel efficient running, reduction of responsiveness with respect to an acceleration instruction and vibrations such as a small shock in response to the change of the gear ratio may be caused. In view of this, the correction limitation unit 11C limits the correction in the revolution speed correction unit 11B, to thereby achieve both the fuel efficient running and the responsiveness with respect to the acceleration instruction. The limitation of the correction as referred to herein includes not only inhibiting the correction itself, but also changing the correction amount. Details of the processing in the revolution speed correction unit 11B and the correction limitation unit 11C are described later.

The target gear ratio calculation unit 13 calculates the target gear ratio so that the speed of revolutions of the engine 4 becomes the target engine revolution speed. That is, the target gear ratio calculation unit 13 calculates the target gear ratio based on the target engine revolution speed and the information relating to the vehicle speed. In this embodiment, the vehicle speed is used as the information relating to the vehicle speed. In this calculation, for example, the target engine revolution speed may be divided by a value obtained by dividing the vehicle speed by the perimeter of the rear wheel 8 and multiplying the same by the reduction ratio of the final reduction mechanism 7, to thereby obtain the target gear ratio. Note that, when the obtained target gear ratio exceeds or falls below the upper limit or the lower limit of the gear ratio of the electronically controlled continuously variable transmission 5, the target gear ratio calculation unit 13 may set the upper limit or the lower limit as the target gear ratio.

Next, the processing for obtaining the target throttle opening degree is described. The control device 10 includes an angle conversion unit 14, a target engine torque calculation unit 15, and a target throttle opening degree calculation unit 18 illustrated in FIG. 3. Further, the target engine torque calculation unit 15 includes a basic engine torque calculation unit 15A, a conversion unit 15B, a drive force correction unit 15C, and a reverse conversion unit 15D. The control device 10 repeatedly executes processing executed by those control blocks at a predefined cycle.

The angle conversion unit 14 is a unit configured to convert the accelerator operation amount detected by the accelerator sensor 24 into the throttle opening degree. The throttle opening degree obtained by the angle conversion unit 14 is herein referred to as "basic throttle opening degree". The throttle opening degree and the accelerator operation amount have a one-to-one relationship therebetween, and the accelerator operation amount is converted into the basic throttle opening degree by using an arbitrary conversion expression or referring to a table or a map. In this case, such a conversion that the basic throttle opening degree increases as the accelerator operation amount becomes larger is made.

The target engine torque calculation unit 15 calculates the target engine torque, which corresponds to a target value of the engine torque to be controlled, based on the basic engine revolution speed obtained by the basic revolution speed calculation unit 11A.

The basic engine torque calculation unit 15A calculates a basic engine torque based on the basic engine revolution speed and the basic throttle opening degree. For example, the basic engine torque calculation unit 15A calculates the basic engine torque by the following processing.

The memory 10c stores a map that shows a relationship between the throttle opening degree and the engine revolution speed, and the engine torque, which is determined by output characteristics of the engine 4 (this map is hereinafter referred to as "engine torque map"). The basic engine torque calculation unit 15A refers to the engine torque map to uniquely calculate the basic engine torque based on the basic throttle opening degree and the basic engine revolution speed. Note that, as described above, the basic revolution speed calculation unit 11A calculates the basic engine revolution speed based on the accelerator operation amount and the vehicle speed, and the angle conversion unit 14 converts the accelerator operation amount into the basic throttle opening degree. Therefore, the calculation based on the basic throttle opening degree and the basic engine revolution speed is eventually the calculation based on the accelerator operation amount and the vehicle speed. Therefore, the basic engine torque calculation unit 15A does not need to always determine the basic engine torque based on the basic engine revolution speed and the basic throttle opening degree as described above, and may determine the basic engine torque directly based on the accelerator operation amount and the vehicle speed.

FIG. 5 is a graph showing an example of the engine torque map. The memory 10c stores data obtained by quantifying the map. In the engine torque map shown in FIG. 5, the horizontal axis represents an engine revolution speed, and the vertical axis represents engine torque. FIG. 5 exemplifies curves Th1 to Th4 that correspond to respective accelerator operation amounts. In this case, the curves Th1 to Th4 have correspondence to specific accelerator operation amounts. For example, the curve Th4 is selected under a specific state in which the accelerator operation amount is large, the curve Th1 is selected under a specific state in which the accelerator operation amount is small, and the curve Th2 or Th3 is selected under an intermediate state. Note that, a larger number of curves than those shown in FIG. 5 are actually prepared so as to support finer changes of the accelerator operation amount.

The basic engine torque calculation unit 15A refers to this engine torque map to calculate the basic engine torque corresponding to the basic throttle opening degree and the basic engine revolution speed. That is, when a curve corresponding to a certain accelerator operation amount, as an example, the curve Th4 is selected, the basic engine torque is determined based on the basic engine revolution speed at that time point.

The conversion unit 15B once converts the obtained basic engine torque into a drive force (hereinafter referred to as "basic drive force"), and then the drive force correction unit 15C performs necessary correction to obtain the target drive force. Then, the reverse conversion unit 15D performs re-conversion to convert the target drive force into the target engine torque. The drive force correction unit 15C corrects the basic drive force so as to prevent the temporal change of the drive force of the saddle-ride type vehicle 1, which is caused by the basic engine torque obtained by the basic engine torque calculation unit 15A, from giving an unnatural impression or an uncomfortable feeling to the occupant to disturb the ride quality. The drive force correction unit 15C mainly functions as a filter relating to time. Examples of the processing performed here include basic drive force waveform shaping processing of shaping a drastic change (for example, step-like change) of the basic drive force into a gentle change. Note that, the reason why the drive force correction unit 15C does not directly correct the basic engine torque but corrects the basic drive force obtained through conversion of the basic engine torque is that the drive force can take into consideration of the inertia torque and loss of the engine 4 and the electronically controlled continuously variable transmission 5 in contrast to the engine torque. Therefore, the actual behavior of the saddle-ride type vehicle 1 can be more faithfully reflected, including the change and loss of the inertia torque.

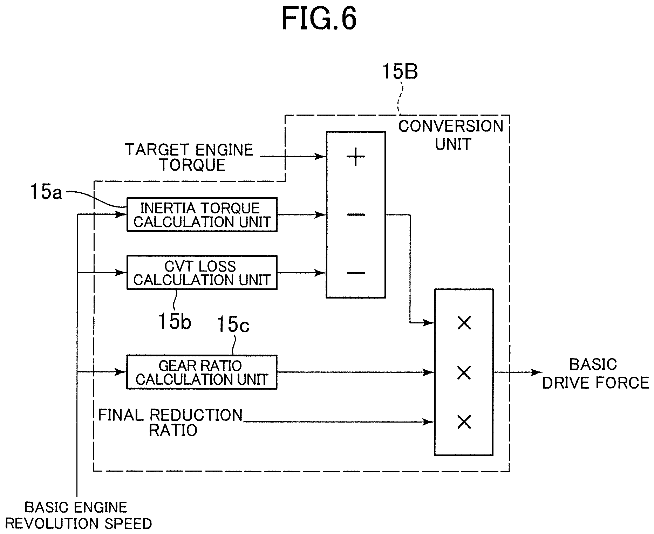

FIG. 6 is a diagram illustrating an example of a control block of the conversion unit 15B. As illustrated in FIG. 6, the conversion unit 15B obtains the basic drive force as follows. The inertia torque of the engine, which is calculated by an inertia torque calculation unit 15a, and the torque to be lost in the electronically controlled continuously variable transmission 5, which is calculated by a CVT loss calculation unit 15b, are subtracted from the target engine torque, and the result is multiplied by the gear ratio of the electronically controlled continuously variable transmission 5, which is calculated by a gear ratio calculation unit 15c, and the reduction ratio of the final reduction mechanism 7 (hereinafter referred to as "final reduction ratio"). In this case, the inertia torque of the engine is inertia torque generated due to change of the engine revolution speed, and is calculated by the inertia torque calculation unit 15a based on the temporal change of the basic engine revolution speed. Further, the torque to be lost in the electronically controlled continuously variable transmission 5 means a transmission loss in the electronically controlled continuously variable transmission 5, and is calculated by the CVT loss calculation unit 15b based on the basic engine revolution speed. Note that, in this case, the gear ratio of the electronically controlled continuously variable transmission 5 may be additionally considered. Further, the gear ratio of the electronically controlled continuously variable transmission 5 is calculated by the gear ratio calculation unit 15c based on the basic engine revolution speed and the information relating to the current vehicle speed. Note that, when the gear ratio calculated here exceeds or falls below the upper limit or the lower limit of the gear ratio of the electronically controlled continuously variable transmission 5, the gear ratio calculation unit 15c uses the upper limit or the lower limit as the gear ratio.

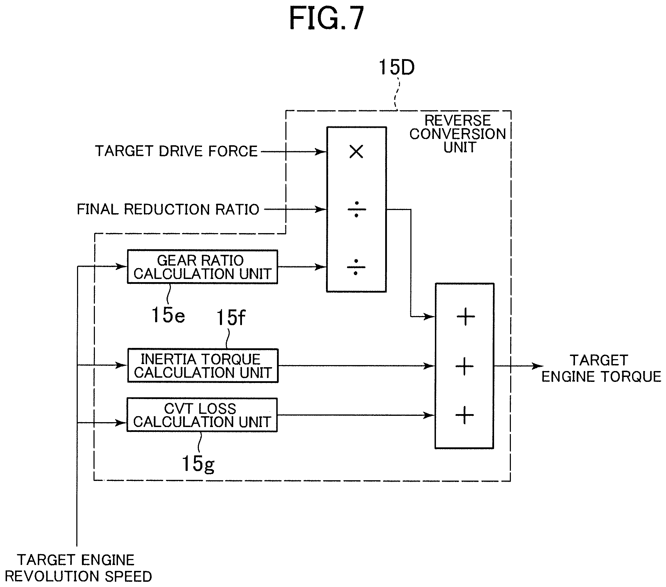

FIG. 7 is a diagram illustrating an example of a control block of the reverse conversion unit 15D. The reverse conversion unit 15D performs conversion reverse to that in the conversion unit 15B, and obtains the target engine torque as follows. The target drive force is divided by the final reduction ratio and the gear ratio calculated by a gear ratio calculation unit 15e, and the result is added to the inertia torque calculated by an inertia torque calculation unit 15f and the torque calculated by a CVT loss calculation unit 15g. In this case, as illustrated in FIG. 7, the gear ratio calculation unit 15e, the inertia torque calculation unit 15f, and the CVT loss calculation unit 15g each perform calculation based on the target engine revolution speed.

Note that, when the basic drive force is not corrected by the drive force correction unit 15C illustrated in FIG. 3, the conversion unit 15B, the drive force correction unit 15C, and the reverse conversion unit 15D may be omitted. In this case, the basic engine torque obtained by the basic engine torque calculation unit 15A is directly set as the target engine torque.

The obtained target engine torque is input to the target throttle opening degree calculation unit 18 together with the target engine revolution speed. Then, the target throttle opening degree calculation unit 18 calculates the target throttle opening degree based on the target engine torque and the target engine revolution speed. This calculation corresponds to conversion reverse to the calculation performed in the basic engine torque calculation unit 15A. That is, the target throttle opening degree calculation unit 18 refers again to the engine torque map shown in FIG. 5, and examines which throttle opening degree is represented by the curve on which the point on the map specified by the target engine torque and the target engine revolution speed is located, to thereby obtain the target throttle opening degree.

In the above-mentioned configuration, the basic engine revolution speed and the target engine revolution speed, which are values intimately relating to the engine revolution speed to be controlled, are determined, and those values are used to calculate the target throttle opening degree and the target gear ratio. With such a configuration, the control of the engine revolution speed (specifically, the correction of the basic engine revolution speed by the revolution speed correction unit 11B) is achieved.

Subsequently, the behavior during running of the saddle-ride type vehicle 1 having the above-mentioned configuration is described. First, a case where the correction of the basic engine revolution speed by the revolution speed correction unit 11B and the correction of the drive force by the drive force correction unit 15C are not performed is described.

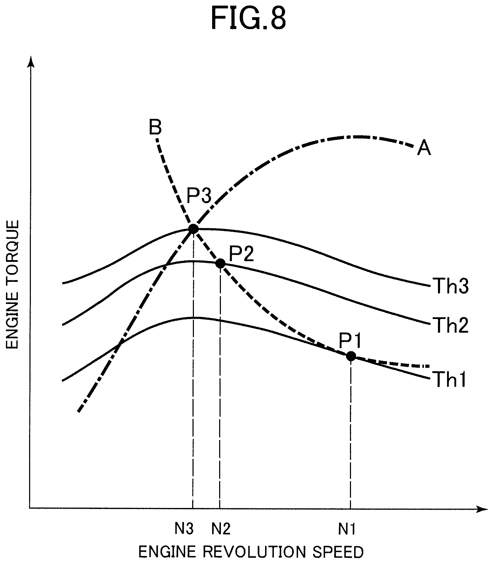

FIG. 8 is a graph showing a relationship between the engine revolution speed and the engine torque at a certain throttle opening degree. In FIG. 8, the horizontal axis represents an engine revolution speed, and the vertical axis represents engine torque. The curves Th1, Th2, and Th3 shown in FIG. 8 each represent the relationship between the engine revolution speed and the engine torque at a specific throttle opening degree. In this case, as compared to the curve Th1, the curve Th2 and the curve Th3 have larger throttle opening degrees. Further, the curve A represented by the dashed-dotted line represents the condition for achieving the best fuel efficiency, and is hereinafter called an "optimum efficiency drive line". In FIG. 8, the optimum efficiency drive line A represents that, if a state of the saddle-ride type vehicle 1 represented by an arbitrary point on the graph is closer to the optimum efficiency drive line A, the fuel efficiency is better.

In this case, with reference to FIG. 3 as appropriate, under a state in which the revolution speed correction unit 11B does not correct the basic engine revolution speed, the target engine revolution speed used in the target throttle opening degree calculation unit 18 is equal to the basic engine revolution speed. Further, the calculation in the basic engine torque calculation unit 15A and the calculation in the target throttle opening degree calculation unit 18 have a reverse conversion relationship. Therefore, under a state in which the drive force correction unit 15C does not correct the drive force, the target throttle opening degree obtained by the target throttle opening degree calculation unit 18 is eventually equal to the basic throttle opening degree obtained by the angle conversion unit 14. The basic throttle opening degree is a value uniquely determined by the accelerator operation amount, and hence, in this case, the target throttle opening degree is eventually determined by the operation amount of the accelerator grip 3a by the occupant. Note that, the running in this state is called "normal running".

At this time, if the target throttle opening degree is in the state of the curve Th1 when the engine revolution speed is in the state of N1 in FIG. 8, the saddle-ride type vehicle 1 is in a state P1 represented as a point on the same graph. This state P1 is located at a position separated from the optimum efficiency drive line A, and cannot be said to be a preferred state in view of the fuel efficiency.

In this case, the curve B represented by the broken line in FIG. 8 is an equivalent output curve passing through the state P1. The equivalent output curve is an aggregate of states in which the same engine output (that is, drive force) can be obtained on the curve. Therefore, the state of the saddle-ride type vehicle 1 is moved in a direction to decrease the engine revolution speed along the curve B, and is set to a state P3, that is, a point at which the engine revolution speed is N3 and the throttle opening degree is Th3, to thereby most improve the fuel efficiency. The engine revolution speed at the point at which the equivalent output curve intersects with the optimum efficiency drive line A as described above is called an "optimum efficiency engine revolution speed". At this time, the gear ratio of the electronically controlled continuously variable transmission 5 is automatically adjusted by the processing of the target gear ratio calculation unit 13 so that the vehicle speed of the saddle-ride type vehicle 1 is maintained, and the gear ratio closer to the high gear side is selected as the target gear ratio.

Based on the consideration above, it is understood that the fuel efficiency of the saddle-ride type vehicle 1 during running is improved by correcting, in the revolution speed correction unit 11B, the basic engine revolution speed so as to cause the state of the saddle-ride type vehicle 1 to approach the optimum efficiency drive line A along the equivalent output curve. Therefore, the memory 10c may store data obtained by quantifying the map representing a large number of equivalent output curves and the optimum efficiency drive line A, and the revolution speed correction unit 11B may refer to the map to determine the correction amount of the basic engine revolution speed. Note that, the running under the state in which the basic engine revolution speed is corrected is called "fuel efficient running".

However, when the state of the saddle-ride type vehicle 1 is simply corrected to be set as a point on the optimum efficiency drive line A, as described above, the target engine revolution speed may be excessively reduced, which may be an undesirable state for an occupant driving the saddle-ride type vehicle 1. Specifically, the responsiveness with respect to the acceleration instruction is reduced, and vibrations such as a small shock are generated because the change range of the gear ratio of the electronically controlled continuously variable transmission 5 is large.

In view of this, the correction limitation unit 11C limits the correction of the basic engine revolution speed in the revolution speed correction unit 11B. With this, the correction of the basic engine revolution speed itself is inhibited, or the correction range is changed (specifically, changed so as to reduce the correction range), to thereby control the target engine revolution speed so as not to be excessively reduced.

How to limit the correction by the correction limitation unit 11C is required to be designed in accordance with the desired drive characteristics determined based on the type and application of the saddle-ride type vehicle 1, and may be designed based on various criteria. Now, taking a motorcycle as an example, the criteria of the limitation of the correction in the saddle-ride type vehicle 1 of this embodiment are exemplified.

<Criterion 1>

In this criterion, depending on the running state of the saddle-ride type vehicle 1, the correction of the basic engine revolution speed by the revolution speed correction unit 11B is limited, and the correction amount is changed.

Specifically, the correction limitation unit 11C calculates a value referred to as a drive state value based on at least one parameter selected from the accelerator operation amount, the vehicle speed, an accelerator operation amount change rate, which is a differential value of the accelerator operation amount, and acceleration, and limits the correction of the basic engine revolution speed and changes the correction amount based on the drive state value.

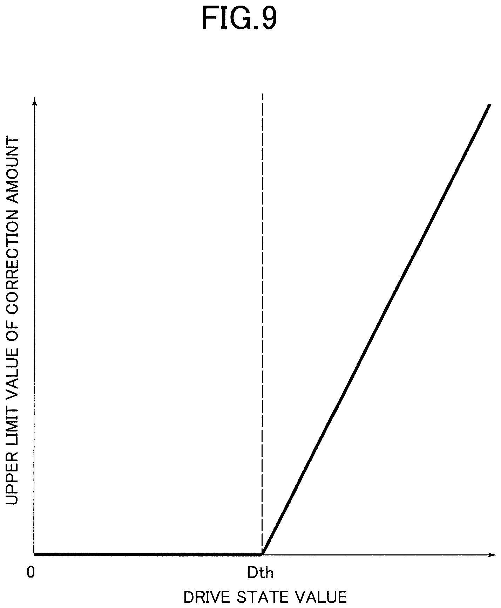

FIG. 9 is a graph showing a relationship between the drive state value and the upper limit value of the correction amount determined by the drive state value. The memory 10c stores data obtained by quantifying the relationship. As shown in FIG. 9, under a state in which the drive state value is small, the upper limit value of the correction amount is 0, that is, no correction is allowed, and the correction of the basic engine revolution speed is limited. Then, when the drive state value exceeds a threshold value of Dth, the upper limit value of the correction amount linearly increases in accordance with the drive state value. That is, the correction amount is changed. Note that, the curve of the upper limit value of the correction amount shown in FIG. 9 is merely an example, and may be changed as appropriate. For example, after the drive state value exceeds the threshold value of Dth, the upper limit value of the correction amount may not be linearly increased but increased in an arbitrary curve shape or in a stepped shape. Further, an upper limit may be provided to the upper limit value of the correction amount itself.

How to determine the drive state value is arbitrary, but in this embodiment, the drive state value is determined based on a load coefficient that is determined based on the accelerator operation amount and the vehicle speed, the accelerator operation amount change rate, or the vehicle speed and the acceleration. Note that, the load coefficient herein refers to a value determined based on the parameters relating to the drive state of the saddle-ride type vehicle 1, and is a value representing the level of probability of the change of the drive state in the saddle-ride type vehicle 1. In the example described in this embodiment, as the value of the load coefficient becomes larger, the drive state of the saddle-ride type vehicle 1 is stable and the change due to the acceleration instruction or the like less occurs. As the value of the load coefficient becomes smaller, the drive state of the saddle-ride type vehicle 1 easily changes, and it is expected that acceleration frequently occurs.

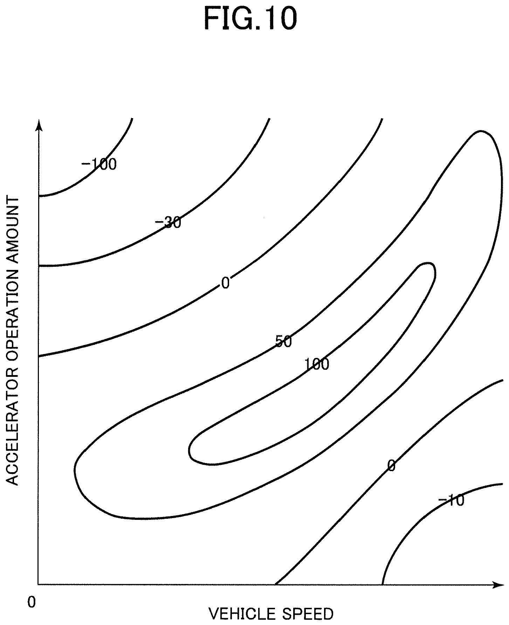

FIG. 10 is an example of a map for determining a first load coefficient L1 based on the accelerator operation amount and the vehicle speed. The memory 10c stores data obtained by quantifying the map. In FIG. 10, the solid line represents the contour of the first load coefficient L1. The first load coefficient L1 is uniquely determined based on the vehicle speed and the accelerator operation amount.

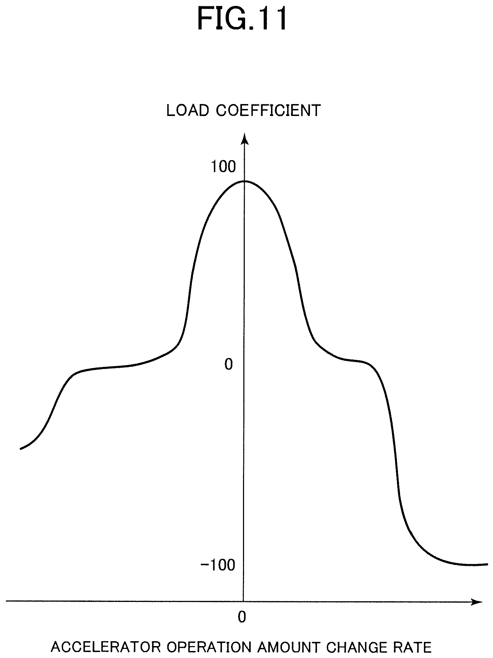

FIG. 11 is an example of a map for determining a second load coefficient L2 based on the accelerator operation amount change rate. The memory 10c stores data obtained by quantifying the relationship. In FIG. 11, the solid line represents the value of the second load coefficient L2 based on the accelerator operation amount.

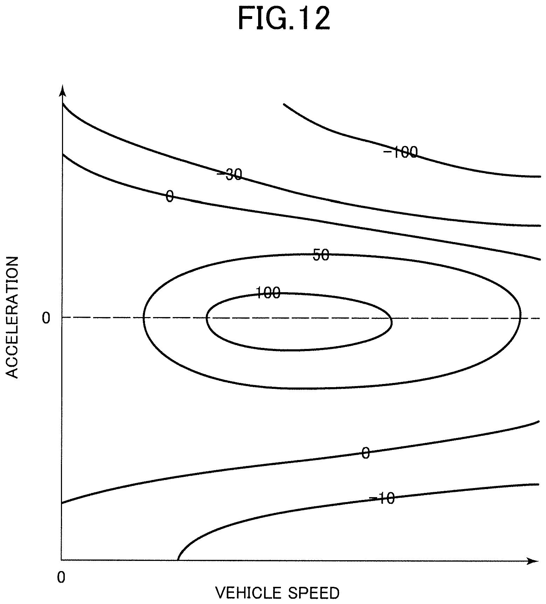

FIG. 12 is an example of a map for determining a third load coefficient L3 based on the vehicle speed and the acceleration. The memory 10c stores data obtained by quantifying the relationship. In this case, the acceleration is a differential value of the vehicle speed. In FIG. 12, the solid line represents the contour of the third load coefficient L3. The third load coefficient L3 is uniquely determined based on the vehicle speed and the acceleration.

Then, the correction limitation unit 11C selects the load coefficient to be used for determining the drive state value by any one of the following methods. Method 1: The first load coefficient L1, the second load coefficient L2, and the third load coefficient L3 are all used when the signs of all of the load coefficients match with each other, and otherwise all of the load coefficients are not used. Method 2: A sign that is the majority of the signs of the first load coefficient L1, the second load coefficient L2, and the third load coefficient L3 is adopted, and the load coefficients having the same sign as the adopted sign are used.

Then, the correction limitation unit 11C uses the selected load coefficients to determine the correction value of the drive state value by any one of the following calculations. Note that, when no load coefficient is selected, the drive state value is not changed, and the correction value of the drive state value is 0. Calculation 1: All of the load coefficients to be used are integrated. Calculation 2: All of the load coefficients to be used are added. Calculation 3: An average value or a median of all of the load coefficients to be used is used.

Finally, the correction limitation unit 11C adds the determined correction value of the drive state value to the current drive state value. Note that, the drive state value may be provided with an upper limit value and a lower limit value (not limited to 0) as appropriate.

In this embodiment, Method 2 and Calculation 2 described above are adopted, but other method and calculation may be adopted instead. Further, the method of calculating the drive state value described here is merely an example, and any method may be used as long as the method can reasonably derive the drive state value based on appropriate parameters reflecting the drive state of the saddle-ride type vehicle 1.

<Criterion 2>

In this criterion, the correction amount is changed so that the target engine revolution speed, which is obtained as a result of the correction of the basic engine revolution speed by the revolution speed correction unit 11B, is equal to or larger than the optimum efficiency engine revolution speed determined by the optimum efficiency drive line A (see FIG. 8). This point is described with reference to FIG. 8. When the point represented by the basic engine revolution speed and the basic throttle opening degree is P1, for example, assuming that the correction amount of the basic engine revolution speed is determined as a constant value or to be equal to an upper limit amount of the correction value shown in FIG. 9, the correction amount is corrected so that the target engine revolution speed is at least equal to or larger than N3 as the optimum efficiency engine revolution speed.

<Criterion 3>

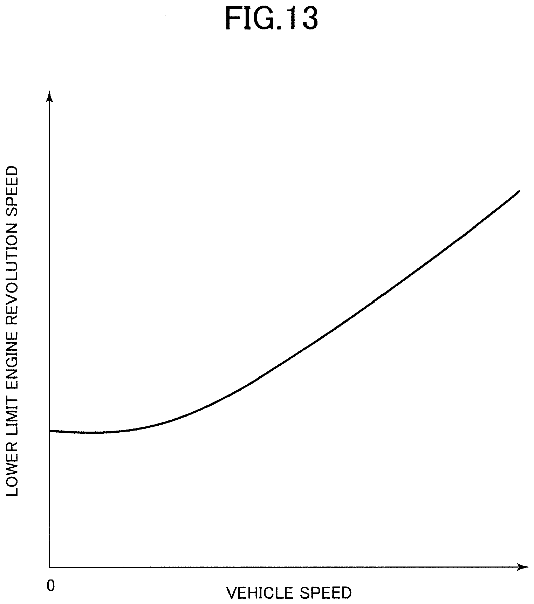

In this criterion, the correction amount is changed so that the target engine revolution speed, which is obtained as a result of the correction of the basic engine revolution speed by the revolution speed correction unit 11B, is equal to or larger than a lower limit engine revolution speed determined based on the vehicle speed. FIG. 13 is an example of a map for determining the lower limit engine revolution speed with respect to the vehicle speed. The memory 10c stores data obtained by quantifying this relationship. The lower limit engine revolution speed may be determined comprehensively considering the response speed for re-acceleration, the vibration of the engine 4, and the like based on the vehicle speed of the saddle-ride type vehicle 1.

<Criterion 4>

In this criterion, when the basic engine revolution speed falls below the optimum efficiency engine revolution speed determined based on the optimum efficiency drive line A (see FIG. 8) or the lower limit engine revolution speed (see FIG. 13) determined based on the vehicle speed, the correction of the basic engine revolution speed by the revolution speed correction unit 11B is inhibited, and the correction is not performed. Under a state in which this criterion is satisfied, the basic engine revolution speed is sufficiently low with respect to the state of the saddle-ride type vehicle 1, and the need to correct the basic engine revolution speed is low.

The four criteria are exemplified above, but in this embodiment, those four criteria are all simultaneously used. However, the present invention is not limited thereto, and only one or a plurality of the four criteria may be used, or a different criterion may be additionally used.

Further, the correction amount used for the basic engine revolution speed by the revolution speed correction unit 11B may be corrected based on the correction amount calculated in the past. This means that, in other words, the correction amount obtained based on the current running state of the saddle-ride type vehicle 1, which is obtained by the above-mentioned processing, is corrected based on the correction amount calculated in the past. Such correction is performed for suppressing the unnatural behavior change of the saddle-ride type vehicle 1 due to a drastic change of the correction amount, for example. Typical examples of such correction include processing of taking a temporal average of the correction amounts from the current to a predetermined past to set the correction amount, and processing of using a so-called low-pass filter that is achieved by an analog circuit or an equivalent circuit thereto.

The embodiment described above represents merely an example of the saddle-ride type vehicle according to the present invention, and the present invention is not limited to the exemplified specific example. The person skilled in the art may arbitrarily change the detailed shape, arrangement, number of the respective members, and the like as necessary. Further, the functional block diagram or the control block diagram illustrated as a specific example represents merely an example, and an arbitrary modification may be made thereto as long as the configuration exhibits a similar function.

Now, a modified example of the above-mentioned embodiment is described. In the above-mentioned embodiment, the revolution speed correction unit 11B illustrated in FIG. 3 switches the target engine revolution speed to a value smaller than the basic engine revolution speed to achieve the fuel efficient running. By the way, when the engine torque is sufficiently low, the fuel efficient running can be achieved even by interrupting fuel supply to the engine. However, if the fuel supply is interrupted when the throttle is still open, the engine torque may drastically vary. In view of this, in this example, the fuel efficiency is improved while suppressing drastic variation of the engine torque by the function and operation described below.

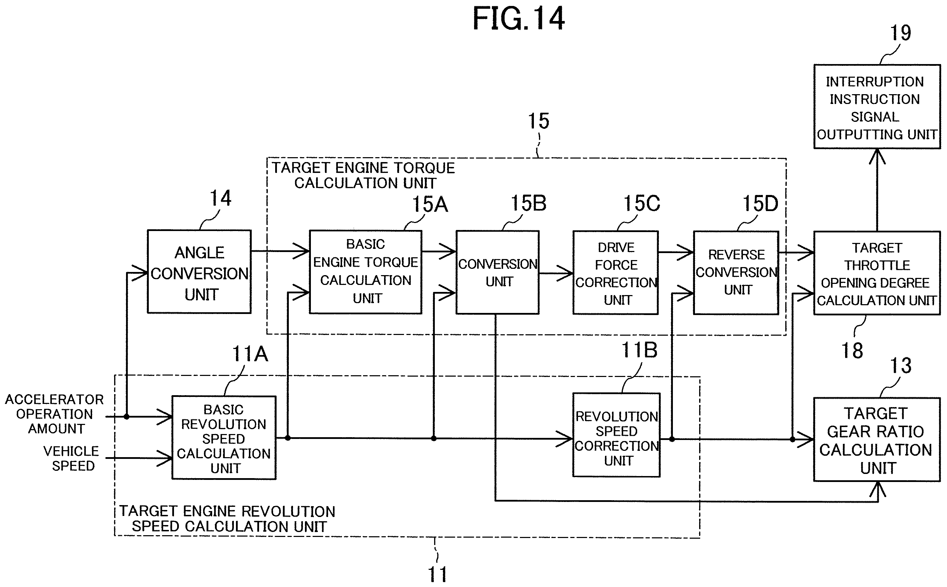

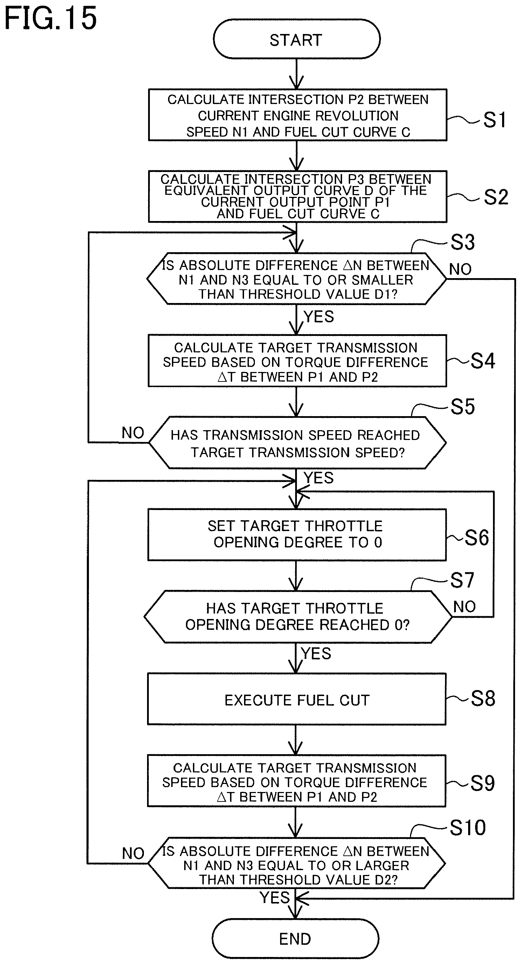

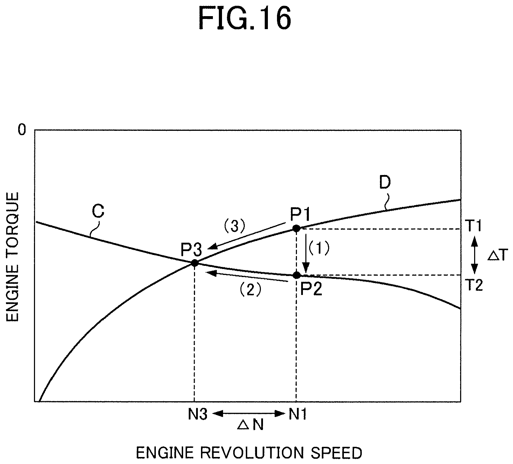

FIGS. 14 and 15 are a block diagram and a flow chart illustrating the function and the operation of the control device 10 according to the modified example. Further, FIG. 16 is a graph showing the function and the operation of the control device 10 according to the modified example. Detailed description of configurations that overlap with the configurations of the above-mentioned embodiment is omitted, and the configurations are denoted by the same reference symbols. The control device 10 of this example includes an interruption instruction signal outputting unit 19 in addition to the respective units illustrated in FIG. 3 described above.

The revolution speed correction unit 11B of the target engine revolution speed calculation unit 11 performs the following fuel efficient correction when engine torque T1 in the current drive state P1 (engine revolution speed N1 and engine torque T1) isnegative. The revolution speed correction unit 11B switches the target engine revolution speed from the engine revolution speed N1 (value equal to the basic engine revolution speed) in the current drive state P1 to the engine revolution speed N3 at an intersection P3 between the equivalent output curve D of the current drive state P1 and a fuel cut curve C. The fuel cut curve C is an aggregate of fuel cut outputs generated when the fuel supply to the engine 4 is interrupted. A map or relational expression representing the fuel cut curve C is stored in the memory 10c.

At this time, the revolution speed correction unit 11B calculates an intersection P2 between the engine revolution speed N1 in the current drive state P1 and the fuel cut curve C, and calculates the intersection P3 between the equivalent output curve D of the current drive state P1 and the fuel cut curve C (S1 and S2 in the flow chart). Further, the revolution speed correction unit 11B determines whether or not an absolute difference ΔN between the engine revolution speed N1, which is the target engine revolution speedbefore the fuel efficient correction, and the engine revolution speed N3, which is the target engine revolution speed after the fuel efficient correction, is equal to or smaller than a threshold value D1 (S3 in the flow chart).

The target gear ratio calculation unit 13 starts control of the time rate of change of the target gear ratio (transmission speed) when the absolute difference ΔN is equal to or smaller than the threshold value (S3: YES). When the target engine revolution speed is switched from a value equal to the basic engine revolution speed to a value smaller than the basic engine revolution speed through the fuel efficient correction, if the target gear ratio is drastically changed, the drive wheel output may drastically vary due to the change of the inertia torque caused thereby. In view of this, in this example, the transmission speed is controlled to suppress the drastic variation of the drive wheel output.

Specifically, the target gear ratio calculation unit 13 determines the transmission speed based on the difference between the drive wheel output input from the conversion unit 15B serving as a drive wheel output calculation unit and the fuel cut output determined based on the fuel cut curve C (S4 in the flow chart). The following expression 1 represents an example for calculating the transmission speed by the target gear ratio calculation unit 13. By determining the transmission speed as described above, even when the engine output is deviated downward from the equivalent output line D, inertia torque corresponding to the decreased amount is added to the drive wheel output, and hence the drive wheel output is maintained to be on the equivalent output line D.

$$M_{Cvt}^{new} = M_{Cvt}^{old} + \frac{T_{samp}}{M_{inertia} \cdot V_{Secondary}^2} \cdot (W_{Cut} - W_{Drive} - W_{Cvtloss})$$

In the expression 1, $M_{Cvt}$ represents a gear ratio, $T_{samp}$ represents a calculation cycle, $M_{inertia}$ represents an inertia corresponding mass on the upstream of the transmission, $V_{secondary}$ represents the speed of revolutions of the output shaft of the transmission, $W_{cut}$ represents a fuel cut output, $W_{drive}$ represents a drive wheel output, and $W_{cvtloss}$ represents a transmission loss. Note that, in the expression 1, an example using power is described. However, the present invention is not limited thereto, and similar calculation can be established even with use of torque.

When the transmission speed reaches a target transmission speed (S5: YES), the target throttle opening degree calculation unit 18 reduces the target throttle opening degree to 0 (S6 in the flow chart). With this, the engine output moves onto the fuel cut curve C as indicated by (1) of FIG. 16. On the other hand, the drive wheel output is maintained on the equivalent output line D through control of the transmission speed described above.

When the target throttle opening degree reaches 0 (S7: YES), the interruption instruction signal outputting unit 19 outputs an interruption instruction signal for instruction of the interruption of the fuel supply to the engine 4, to thereby execute the fuel cut (S8 in the flow chart). As described above, the fuel supply is interrupted after the throttle is closed, and thus the fuel efficiency can be improved while suppressing drastic variation of the engine torque.

The target gear ratio calculation unit 13 continues the above-mentioned control of the transmission speed even after the target throttle opening degree reaches 0 and the fuel cut is executed (S9 in the flow chart). With this, the engine output moves on the fuel cut curve C toward the intersection P3 between the equivalent output curve D and the fuel cut curve C as indicated by (2) of FIG. 16, while the drive wheel output moves on the equivalent output curve D toward the intersection P3 as indicated by (3) of FIG. 16. During this period, the target gear ratio calculation unit 13 performs calculation by the above-mentioned expression 1, and determines the transmission speed corresponding to the difference between the drive wheel output on the equivalent output line D and the engine output on the fuel cut curve C. With this, the drive wheel output becomes a value obtained by adding the inertia torque corresponding to the difference to the engine output. Therefore, the drive wheel output is maintained on the equivalent output line D without being raised from the last value.

Note that, when the absolute difference ∆N between the engine revolution speed N1 as the basic engine revolution speed and the engine revolution speed N3 at the intersection P3 is equal to or larger than a threshold value D2 (S10: YES), the target gear ratio calculation unit 13 ends the above-mentioned control of the transmission speed, the target throttle opening degree calculation unit 18 ends the control of setting the target throttle opening degree to 0, and the interruption instruction signal outputting unit 19 ends the execution of the fuel cut.

**Claims**

1. A vehicle control device (10) for controlling a gear ratio of a continuously variable transmission (5) and a throttle opening degree, the vehicle control device (10) comprising:

   a basic engine revolution speed calculation unit (11A) being configured to calculate a basic engine revolution speed based on an accelerator operation amount and a vehicle speed;
   a target engine revolution speed calculation unit (11) being configured to calculate a target engine revolution speed based on the basic engine revolution speed, the target engine revolution speed calculation unit (11) being configured to switch the target engine revolution speed between a value equal to the basic engine revolution speed and a value smaller than the basic engine revolution speed;
   a target gear ratio calculation unit (13) being configured to calculate a target gear ratio based on the target engine revolution speed;
   a basic engine torque calculation unit (15A) being configured to calculate a basic engine torque based on an accelerator operation amount and the basic engine revolution speed;
   a target throttle opening degree calculation unit (18) being configured to calculate a target throttle opening degree based on the basic engine torque and the target engine revolution speed, the target throttle opening degree calculation unit (18) being configured to reduce the target throttle opening degree after the target engine revolution speed is switched to the value smaller than the basic engine revolution speed; and
   an interruption instruction signal outputting unit (19) being configured to output an interruption instruction signal for instruction of interruption of fuel supply to an engine after the target throttle opening degree reaches 0.

2. The vehicle control device (10) according to claim 1, wherein the target gear ratio calculation unit (13) is configured to determine a time rate of change of the target gear ratio so that a drive wheel output generated on a drive wheel (8) of a vehicle is equal to or smaller than a last value after the target engine revolution speed is switched to the value smaller than the basic engine revolution speed.

3. The vehicle control device (10) according to claim 1, further comprising a drive wheel output calculation unit being configured to calculate a drive wheel output generated on a drive wheel (8) of a vehicle based on the basic engine torque and the basic engine revolution speed,
   wherein the target gear ratio calculation unit (13) is configured to determine a time rate of change of the target gear ratio so as to maintain the drive wheel output on an equivalent output line after the target engine revolution speed is switched to the value smaller than the basic engine revolution speed.

4. The vehicle control device (10) according to claim 1, further comprising a drive wheel output calculation unit being configured to calculate a drive wheel output generated on a drive wheel (8) of a vehicle based on the basic engine torque and the basic engine revolution speed,
   wherein the target gear ratio calculation unit (13) is configured to determine a time rate of change of the target gear ratio based on a difference between the drive wheel output and a fuel cut output generated when the fuel supply to the engine is interrupted after the target engine revolution speed is switched to the value smaller than the basic engine revolution speed.

5. The vehicle control device (10) according to any one of claims 2 to 4, wherein the target gear ratio calculation unit (13) is configured to start control of the time rate of change of the target gear ratio when a difference between the target engine revolution speed and the basic engine revolution speed is equal to or smaller than a first threshold value determined in advance.

6. The vehicle control device (10) according to claim 5, wherein the target engine revolution speed calculation unit (11) is configured to set, as the target engine revolution speed, an engine revolution speed at which an equivalent output line of an engine output calculated based on the basic engine torque and the basic engine revolution speed intersects with an equivalent output line of a fuel cut output generated when the fuel supply to the engine is interrupted.

7. The vehicle control device (10) according to claim 5 or 6, wherein the target gear ratio calculation unit (13) is configured to end the control of the time rate of change of the target gear ratio when the difference between the target engine revolution speed and the basic engine revolution speed is equal to or larger than a second threshold value larger than the first threshold value.

8. A vehicle control method for controlling a gear ratio of a continuously variable transmission (5) and a throttle opening degree, the vehicle control method comprising:

a basic engine revolution speed calculation step of calculating a basic engine revolution speed based on an accelerator operation amount and a vehicle speed;
a target engine revolution speed calculation step of calculating a target engine revolution speed based on the basic engine revolution speed, the target engine revolution speed calculation step comprising switching the target engine revolution speed between a value equal to the basic engine revolution speed and a value smaller than the basic engine revolution speed;
a target gear ratio calculation step of calculating a target gear ratio based on the target engine revolution speed;
a basic engine torque calculation step of calculating a basic engine torque based on an accelerator operation amount and the basic engine revolution speed;
a target throttle opening degree calculation step of calculating a target throttle opening degree based on the basic engine torque and the target engine revolution speed, the target throttle opening degree calculation step comprising reducing the target throttle opening degree after the target engine revolution speed is switched to the value smaller than the basic engine revolution speed; and
an interruption instruction signal outputting step of outputting an interruption instruction signal for instruction of interruption of fuel supply to an engine after the target throttle opening degree reaches 0.

9. The vehicle control method according to claim 8, further comprising:

determining a time rate of change of the target gear ratio so that a drive wheel output generated on a drive wheel (8) of a vehicle is equal to or smaller than a last value after the target engine revolution speed is switched to the value smaller than the basic engine revolution speed.

10. The vehicle control method according to claim 8, further comprising:

calculating a drive wheel output generated on a drive wheel (8) of a vehicle based on the basic engine torque and the basic engine revolution speed,
determining a time rate of change of the target gear ratio so as to maintain the drive wheel output on an equivalent output line after the target engine revolution speed is switched to the value smaller than the basic engine revolution speed.

11. The vehicle control method according to claim 8, further comprising:

calculating a drive wheel output generated on a drive wheel (8) of a vehicle based on the basic engine torque and the basic engine revolution speed,
determining a time rate of change of the target gear ratio based on a difference between the drive wheel output and a fuel cut output generated when the fuel supply to the engine is interrupted after the target engine revolution speed is switched to the value smaller than the basic engine revolution speed.

12. The vehicle control method according to any one of claims 9 to 11, further comprising: starting control of the time rate of change of the target gear ratio when a difference between the target engine revolution speed and the basic engine revolution speed is equal to or smaller than a first threshold value determined in advance.

13. The vehicle control method according to claim 12, further comprising:

setting, as the target engine revolution speed, an engine revolution speed at which an equivalent output line of an engine output calculated based on the basic engine torque and the basic engine revolution speed intersects with an equivalent output line of a fuel cut output generated when the fuel supply to the engine is interrupted.

**14.** The vehicle control method according to claim 12 or 13, further comprising:

ending the control of the time rate of change of the target gear ratio when the difference between the target engine revolution speed and the basic engine revolution speed is equal to or larger than a second threshold value larger than the first threshold value.

**15.** A saddle-ride type vehicle (1), comprising the vehicle control device (10) according to any one of claims 1 to 7.

**Patentansprüche**

**1.** Eine Fahrzeug-Steuer-Vorrichtung (10) zur Steuerung einer Getriebe-Übersetzung eines kontinuierlich-variablen Getriebes (5) und eines Drossel-Öffnungsgrades, die Fahrzeug-Steuer-Vorrichtung (10) umfasst:

eine Basis-Motordrehzahl-Berechnungs-Einheit (11A), die konfiguriert ist, um eine Basis-Motordrehzahl auf Grundlage eines Beschleuniger-Betätigungsbetrags und einer Fahrzeug-Geschwindigkeit zu berechnen;
eine Ziel-Motordrehzahl-Berechnungs-Einheit (11), die konfiguriert ist, um eine Ziel-Motordrehzahl auf Grund der Basis-Motordrehzahl zu berechnen, die Ziel-Motordrehzahl-Berechnungs-Einheit (11) ist konfiguriert, um die Ziel-Motordrehzahl zwischen einem Wert, gleich mit der Basis-Motordrehzahl, und einem Wert, kleiner als die Basis-Motordrehzahl, zu schalten;
eine Ziel-Getriebe-Übersetzungs-Berechnungs-Einheit (13), die konfiguriert ist, um eine Ziel-Getriebe-Übersetzung auf Grundlage der Ziel-Motordrehzahl zu berechnen;
eine Basis-Motormoment-Berechnungs-Einheit (15A), die konfiguriert ist, um ein Basis-Motormoment auf Grundlage eines Beschleuniger-Betätigungsbetrags und der Basis-Motordrehzahl zu berechnen;
eine Ziel-Drossel-Öffnungsgrad-Berechnungs-Einheit (18), die konfiguriert ist, um einen Ziel-Drossel-Öffnungsgrad auf Grundlage des Basis-Motormoments und der Ziel-Motordrehzahl zu berechnen, die Ziel-Drossel-Öffnungsgrad-Berechnungs-Einheit (18) ist konfiguriert, um den Ziel-Drossel-Öffnungsgrad zu reduzieren, nachdem die Ziel-Motordrehzahl zu dem Wert, kleiner als die Basis-Motordrehzahl, geschaltet ist; und
eine Unterbrechungs-Instruktions-Signal-Ausgabe-Einheit (19), die konfiguriert ist, um ein Unterbrechungs-Instruktions-Signal auszugeben zur Instruktion einer Unterbrechung der Kraftstoff-Zufuhr zu einem Motor, nachdem der Ziel-Drossel-Öffnungsgrad 0 erreicht.

**2.** Die Fahrzeug-Steuer-Vorrichtung (10) gemäß Anspruch 1, wobei die Ziel-Getriebe-Übersetzungs-Berechnungs-Einheit (13) konfiguriert ist, um eine Zeit-Rate der Änderung der Ziel-Getriebe-Übersetzung zu bestimmen, sodass eine Antriebs-Rad-Abgabe, die durch ein Antriebs-Rad (8) eines Fahrzeugs erzeugt ist, gleich oder kleiner ist als zumindest ein letzter Wert, nachdem die Ziel-Motordrehzahl zu dem Wert, kleiner als die Basis-Motordrehzahl, geschaltet ist.

**3.** Die Fahrzeug-Steuer-Vorrichtung (10) gemäß Anspruch 1, die weiter eine Antriebs-Rad-Abgabe-Berechnungs-Einheit umfasst, die konfiguriert ist, um eine Antriebs-Rad-Abgabe, die durch ein Antriebs-Rad (8) eines Fahrzeugs erzeugt ist, auf Grundlage des Basis-Motormoments und der Basis-Motordrehzahl zu berechnen, wobei die Ziel-Getriebe-Übersetzungs-Berechnungs-Einheit (13) konfiguriert ist, um eine Zeit-Rate der Änderung der Ziel-Getriebe-Übersetzung zu bestimmen, sodass die Antriebs-Rad-Abgabe aufrecht erhalten wird bei einer Äquivalent-Abgabe-Linie, nachdem die Ziel-Motordrehzahl zu dem Wert, kleiner als die Basis-Motordrehzahl, geschaltet ist.

**4.** Die Fahrzeug-Steuer-Vorrichtung (10) gemäß Anspruch 1, die weiter eine Antriebs-Rad-Abgabe-Berechnungs-Einheit umfasst, die konfiguriert ist, um eine Antriebs-Rad-Abgabe, die durch ein Antriebs-Rad (8) eines Fahrzeugs erzeugt ist, auf Grundlage des Basis-Motormoments und der Basis-Motordrehzahl zu berechnen, wobei die Ziel-Getriebe-Übersetzungs-Berechnungs-Einheit (13) konfiguriert ist, um eine Zeit-Rate der Änderung der Ziel-Getriebe-Übersetzung zu bestimmen, auf Grundlage einer Differenz zwischen der Antriebs-Rad-Abgabe und einer Kraftstoff-Abschalt-Abgabe, die erzeugt wird, wenn die Kraftstoff-Zufuhr zu dem Motor unterbrochen ist, nachdem die Ziel-Motordrehzahl zu dem Wert, kleiner als die Basis-Motordrehzahl, geschaltet ist.

**5.** Die Fahrzeug-Steuer-Vorrichtung (10) gemäß irgendeinem der Ansprüche 2 bis 4, wobei die Ziel-Getriebe-Übersetzungs-Berechnungs-Einheit (13) konfiguriert ist, die Steuerung der Zeit-Rate der Änderung der Ziel-Getriebe-Übersetzung zu starten, wenn eine Differenz zwischen der Ziel-Motordrehzahl und der Basis-Motordrehzahl gleich oder kleiner ist als ein erster Grenzwert, der in vornherein bestimmt ist.

6. Die Fahrzeug-Steuer-Vorrichtung (10) gemäß Anspruch 5, wobei die Ziel-Motordrehzahl-Berechnungs-Einheit (11) konfiguriert ist, um als die Ziel-Motordrehzahl, eine Motordrehzahl zu setzen, bei welcher sich eine Äquivalent-Abgabe-Linie einer Motor-Abgabe, berechnet auf Grundlage des Basis-Motormoments und der Basis-Motordrehzahl, mit einer Äquivalent-Abgabe-Linie einer Kraftstoff-Abschalt-Abgabe, die erzeugt wird, wenn die Kraftstoff-Zufuhr zu dem Motor unterbrochen ist, schneidet.

7. Die Fahrzeug-Steuer-Vorrichtung (10) gemäß Anspruch 5 oder 6, wobei die Ziel-Getriebe-Übersetzungs-Berechnungs-Einheit (13) konfiguriert ist, die Steuerung der Zeit-Rate der Änderung der Ziel-Getriebe-Übersetzung zu beenden, wenn die Differenz zwischen der Ziel-Motordrehzahl und der Basis-Motordrehzahl gleich oder größer als ein zweiter Grenzwert größer als der erste Grenzwert, ist.

8. Ein Fahrzeug-Steuer-Verfahren zur Steuerung einer Getriebe-Übersetzung eines kontinuierlich-variablen Getriebes (5) und eines Drossel-Öffnungsgrades, das Fahrzeug-Steuer-Verfahren (10) umfasst:

   einen Basis-Motordrehzahl-Berechnungs-Schritt der Berechnung einer Basis-Motordrehzahl auf Grundlage eines Beschleuniger-Betätigungsbetrags und einer Fahrzeug-Geschwindigkeit;
   einen Ziel-Motordrehzahl-Berechnungs-Schritt der Berechnung einer Ziel-Motordrehzahl auf Grund der Basis-Motordrehzahl, der Ziel-Motordrehzahl-Berechnungs-Schritt umfasst Schalten der Ziel-Motordrehzahl zwischen einem Wert, gleich mit der Basis-Motordrehzahl, und einem Wert, kleiner als die Basis-Motordrehzahl;
   einen Ziel-Getriebe-Übersetzungs-Berechnungs-Schritt der Berechnung einer Ziel-Getriebe-Übersetzung auf Grundlage der Ziel-Motordrehzahl;
   einen Basis-Motormoment-Berechnungs-Schritt der Berechnung eines Basis-Motormoment auf Grundlage eines Beschleuniger-Betätigungsbetrags und der Basis-Motordrehzahl;
   einen Ziel-Drossel-Öffnungsgrad-Berechnungs-Schritt der Berechnung eines Ziel-Drossel-Öffnungsgrad auf Grundlage des Basis-Motormoments und der Ziel-Motordrehzahl, der Ziel-Drossel-Öffnungsgrad-Berechnungs-Schritt umfasst Reduzieren des Ziel-Drossel-Öffnungsgrad, nachdem die Ziel-Motordrehzahl zu dem Wert, kleiner als die Basis-Motordrehzahl, geschaltet ist; und
   einen Unterbrechungs-Instruktions-Signal-Ausgabe-Schritt des Ausgebens eines Unterbrechungs-Instruktions-Signal zur Instruktion einer Unterbrechung der Kraftstoff-Zufuhr zu einem Motor, nachdem der Ziel-Drossel-Öffnungsgrad 0 erreicht.

9. Das Fahrzeug-Steuer-Verfahren gemäß Anspruch 8, das weiter umfasst:

   Bestimmen einer Zeit-Rate der Änderung der Ziel-Getriebe-Übersetzung, sodass eine Antriebs-Rad-Abgabe, die durch ein Antriebs-Rad (8) eines Fahrzeugs erzeugt ist, gleich oder kleiner ist als zumindest ein letzter Wert, nachdem die Ziel-Motordrehzahl zu dem Wert, kleiner als die Basis-Motordrehzahl, geschaltet ist.

10. Das Fahrzeug-Steuer-Verfahren gemäß Anspruch 8, das weiter umfasst:

    Berechnen einer Antriebs-Rad-Abgabe, die durch ein Antriebs-Rad (8) eines Fahrzeugs erzeugt ist, auf Grundlage des Basis-Motormoments und der Basis-Motordrehzahl,
    Bestimmen einer Zeit-Rate der Änderung der Ziel-Getriebe-Übersetzung, sodass die Antriebs-Rad-Abgabe aufrecht erhalten wird bei einer Äquivalent-Abgabe-Linie, nachdem die Ziel-Motordrehzahl zu dem Wert, kleiner als die Basis-Motordrehzahl, geschaltet ist.

11. Das Fahrzeug-Steuer-Verfahren gemäß Anspruch 8, das weiter umfasst:

    Berechnen einer Antriebs-Rad-Abgabe, die durch ein Antriebs-Rad (8) eines Fahrzeugs erzeugt ist, auf Grundlage des Basis-Motormoments und der Basis-Motordrehzahl,
    Bestimmen einer Zeit-Rate der Änderung der Ziel-Getriebe-Übersetzung, auf Grundlage einer Differenz zwischen der Antriebs-Rad-Abgabe und einer Kraftstoff-Abschalt-Abgabe, die erzeugt wird, wenn die Kraftstoff-Zufuhr zu dem Motor unterbrochen ist, nachdem die Ziel-Motordrehzahl zu dem Wert, kleiner als die Basis-Motordrehzahl, geschaltet ist.

12. Das Fahrzeug-Steuer-Verfahren gemäß irgendeinem der Ansprüche 9 bis 11, das weiter umfasst:

    Starten der Steuerung der Zeit-Rate der Änderung der Ziel-Getriebe-Übersetzung, wenn eine Differenz zwischen der Ziel-Motordrehzahl und der Basis-Motordrehzahl gleich oder kleiner ist als ein erster Grenzwert, der in

EP 2 851 252 B1

vornherein bestimmt ist.

13. Das Fahrzeug-Steuer-Verfahren gemäß Anspruch 12, das weiter umfasst:

Setzen als die Ziel-Motordrehzahl, eine Motordrehzahl, bei welcher sich eine Äquivalent-Abgabe-Linie einer Motor-Abgabe, berechnet auf Grundlage des Basis-Motormoments und der Basis-Motordrehzahl, mit einer Äquivalent-Abgabe-Linie einer Kraftstoff-Abschalt-Abgabe, die erzeugt wird, wenn die Kraftstoff-Zufuhr zu dem Motor unterbrochen ist, schneidet.

14. Das Fahrzeug-Steuer-Verfahren gemäß Anspruch 12 oder 13, das weiter umfasst:

Beenden der Steuerung der Zeit-Rate der Änderung der Ziel-Getriebe-Übersetzung, wenn die Differenz zwischen der Ziel-Motordrehzahl und der Basis-Motordrehzahl gleich oder größer als ein zweiter Grenzwert größer als der erste Grenzwert, ist.

15. Ein Sattel-Reit-Typ-Fahrzeug (1), das eine Fahrzeug-Steuer-Vorrichtung (10) gemäß irgendeinem der Ansprüche 1 bis 7 umfasst.


**Revendications**

1. Dispositif de commande de véhicule (10) pour commander un rapport d'engrenage d'une transmission variable en continu (5) et un degré d'ouverture du papillon des gaz, dispositif de commande du véhicule (10) comprenant:

une unité de calcul de vitesse de révolution du moteur de base (11 A) étant configurée pour calculer une vitesse de révolution du moteur de base sur une quantité d'actionnement de l'accélérateur et d'une vitesse du véhicule; une unité de calcul de vitesse de révolution de moteur cible (11) étant configurée pour calculer une vitesse de révolution du moteur cible fondée sur la vitesse de révolution du moteur de base, l'unité de calcul de vitesse de révolution de moteur cible (11) étant configurée pour commuter la vitesse de révolution du moteur cible entre une valeur égale à la vitesse de révolution du moteur de base et une valeur inférieure à la vitesse de révolution du moteur de base; une unité de calcul de rapport d'engrenage cible (13) étant configurée pour calculer un rapport d'engrenage cible fondé sur la vitesse de révolution du moteur cible; une unité de calcul de couple du moteur de base (15A A) étant configurée pour calculer un couple de moteur de base fondé sur une quantité d'actionnement de l'accélérateur et de la vitesse de révolution du moteur de base; une unité de calcul de degré d'ouverture de papillon cible (18) étant configurée pour calculer un degré d'ouverture de papillon cible fondé sur le couple moteur de base et la vitesse de révolution du moteur cible, une unité de calcul de degré d'ouverture de papillon cible (18) étant configurée pour réduire le degré d'ouverture de papillon cible une fois que la vitesse de révolution du moteur de base est commutée sur la valeur inférieure à la vitesse de révolution du moteur de base; et une unité de sortie de signal d'instruction d'interruption (19) étant configurée pour délivrer en sortie un signal d'instruction d'interruption pour déclencher une interruption de l'alimentation en carburant d'un moteur lorsque le degré d'ouverture de papillon cible tombe à 0.

2. Dispositif de commande de véhicule (10) selon la revendication 1, dans lequel l'unité de calcul de rapport d'engrenage cible (13) est configurée pour déterminer un taux de changement temporel du rapport d'engrenage cible de façon qu'une puissance de roue motrice générée sur une roue motrice (8) d'un véhicule soit inférieure ou égale à une dernière valeur après commutation de la vitesse de révolution du moteur cible à la valeur inférieure à la vitesse de révolution du moteur de base.

3. Dispositif de commande de véhicule (10) selon la revendication 1, comprenant en outre une unité de calcul de puissance de roue motrice configurée pour calculer une puissance de roue motrice générée sur une roue motrice (8) d'un véhicule en fonction du couple du moteur de base et de la vitesse de révolution du moteur de base, dans lequel l'unité de calcul de rapport d'engrenage cible (13) est configurée pour déterminer un taux de changement temporel du rapport d'engrenage cible de façon à maintenir une puissance de roue motrice à un niveau constant après commutation de la vitesse de révolution du moteur cible à la valeur inférieure à la vitesse de révolution du moteur de base.

16

**4.** Dispositif de commande de véhicule (10) selon la revendication 1, comprenant en outre une unité de calcul de puissance de roue motrice configurée pour calculer une puissance de roue motrice générée sur une roue motrice (8) d'un véhicule en fonction du couple du moteur de base et de la vitesse de révolution du moteur de base, dans lequel l'unité de calcul de rapport d'engrenage cible (13) est configurée pour déterminer un taux de changement temporel du rapport d'engrenage cible en fonction d'une différence entre la puissance de roue motrice et une sortie d'interruption de carburant en cas d'interruption d'alimentation du moteur en carburant après commutation de la vitesse de révolution du moteur cible à la valeur inférieure à la vitesse de révolution du moteur de base.

**5.** Dispositif de commande de véhicule (10) selon l'une quelconque des revendications 2 à 4, dans lequel l'unité de calcul de rapport d'engrenage cible (13) est configurée pour déclencher la commande du taux de changement temporel du rapport d'engrenage cible lorsque la différence entre la vitesse de révolution du moteur cible et la vitesse de révolution du moteur de base est inférieure ou égale à une première valeur seuil déterminée à l'avance.

**6.** Dispositif de commande de véhicule (10) selon la revendication 5, dans lequel l'unité de calcul de vitesse de révolution de moteur cible (11) est configurée pour définir, comme vitesse de révolution du moteur cible, une vitesse de révolution du moteur à laquelle une courbe de puissance équivalente d'une puissance du moteur calculée en fonction du couple de base du moteur et de la vitesse de révolution du moteur de base coupe une courbe de puissance équivalente d'une courbe d'interruption de carburant générée lorsque l'alimentation du moteur en carburant est interrompue.

**7.** Dispositif de commande de véhicule (10) selon les revendications 5 ou 6, dans lequel l'unité de calcul de rapport d'engrenage cible (13) est configurée pour terminer la commande du taux de changement temporel du rapport d'engrenage cible lorsque la différence entre la vitesse de révolution du moteur cible et la vitesse de révolution du moteur de base est supérieure ou égale à une seconde valeur seuil supérieure à la première valeur seuil.

**8.** Procédé de commande de véhicule permettant de commander un rapport d'engrenage d'une transmission variable en continu (5) et un degré d'ouverture de papillon, le procédé de commande du véhicule comprenant:

une étape de calcul de vitesse de révolution du moteur de base permettant de calculer une vitesse de révolution du moteur de base en fonction d'une quantité d'actionnement de l'accélérateur et d'une vitesse du véhicule;
une étape de calcul de vitesse de révolution de moteur cible permettant de calculer une vitesse de révolution du moteur cible fondée sur la vitesse de révolution du moteur de base, l'étape de calcul de la vitesse de révolution du moteur cible consistant à commuter la vitesse de révolution du moteur cible entre une valeur égale à la vitesse de révolution du moteur de base et une valeur inférieure à la vitesse de révolution du moteur de base;
une étape de calcul de rapport d'engrenage cible consistant à calculer un rapport d'engrenage cible fondé sur la vitesse de révolution du moteur cible;
une unité de calcul de couple du moteur de base consistant à calculer un couple de moteur de base fondé sur une quantité d'actionnement de l'accélérateur et la vitesse de révolution du moteur de base;
une étape de calcul de degré d'ouverture de papillon cible consistant à calculer un degré d'ouverture de papillon cible fondé sur le couple moteur de base et la vitesse de révolution du moteur cible, l'étape de calcul de degré d'ouverture de papillon cible consistant à réduire le degré d'ouverture de papillon cible une fois que la vitesse de révolution du moteur de base est commutée sur la valeur inférieure à la vitesse de révolution du moteur de base; et
une étape de sortie de signal d'instruction d'interruption consistant à délivrer en sortie un signal d'instruction d'interruption pour déclencher une interruption de l'alimentation en carburant d'un moteur lorsque le degré d'ouverture de papillon cible tombe à 0.

**9.** Procédé de commande de véhicule selon la revendication 8, consistant en outre à:

déterminer un taux de changement temporel du rapport d'engrenage cible de façon qu'une puissance de roue motrice générée sur une roue motrice (8) d'un véhicule soit inférieure ou égale à une dernière valeur après commutation de la vitesse de révolution du moteur cible à la valeur inférieure à la vitesse de révolution du moteur de base.

**10.** Procédé de commande de véhicule selon la revendication 8, consistant en outre à:

calculer une sortie de la roue motrice générée sur une roue motrice (8) d'un véhicule sur la base du couple moteur de base et de la vitesse de révolution du moteur de base,

déterminer un taux de changement temporel du rapport d'engrenage cible de façon à maintenir une puissance de roue motrice à un niveau constant après commutation de la vitesse de révolution du moteur cible à la valeur inférieure à la vitesse de révolution du moteur de base.

**11.** Procédé de commande de véhicule selon la revendication 8, consistant en outre à:

calculer une puissance de roue motrice générée sur une roue motrice (8) d'un véhicule sur la base du couple moteur de base et de la vitesse de révolution du moteur de base, déterminer un taux de changement temporel du rapport d'engrenage cible en fonction d'une différence entre la puissance de roue motrice et une sortie d'interruption de carburant en cas d'interruption d'alimentation du moteur en carburant après commutation de la vitesse de révolution du moteur cible à la valeur inférieure à la vitesse de révolution du moteur de base.

**12.** Procédé de commande de véhicule selon l'une quelconque des revendications 9 à 11, consistant en outre à:

déclencher la commande du taux de changement temporel du rapport d'engrenage cible lorsque la différence entre la vitesse de révolution du moteur cible et la vitesse de révolution du moteur de base est inférieure ou égale à une première valeur seuil déterminée à l'avance.

**13.** Procédé de commande de véhicule selon la revendication 12, consistant en outre à:

définir comme la vitesse de révolution du moteur cible, une vitesse de rotation du moteur à laquelle une courbe de puissance équivalente d'une puissance du moteur calculée en fonction du couple de base du moteur et de la vitesse de révolution du moteur de base coupe une courbe de puissance équivalente d'une courbe d'interruption de carburant générée lorsque l'alimentation du moteur en carburant est interrompue.

**14.** Procédé de commande de véhicule selon les revendications 12 ou 13, consistant en outre à:

terminer la commande du taux de changement temporal du rapport d'engrenage cible lorsque la différence entre la vitesse de révolution du moteur cible et la vitesse de révolution du moteur de base est supérieure ou égale à une seconde valeur seuil supérieure à la première valeur seuil.

**15.** Véhicule à monture à selle (1) comprenant le dispositif de commande de véhicule (10) selon l'une quelconque des revendications 1 à 7.

# FIG.1

EP 2 851 252 B1

# FIG.2

EP 2 851 252 B1

# FIG.3

ACCELERATOR OPERATION AMOUNT

VEHICLE SPEED

TARGET ENGINE TORQUE CALCULATION UNIT

TARGET ENGINE REVOLUTION SPEED CALCULATION UNIT

EP 2 851 252 B1

**FIG.4**

ENGINE REVOLUTION SPEED MAP

**FIG.5**

ENGINE TORQUE MAP

# FIG.6

# FIG.7

15D

TARGET DRIVE FORCE ⟶ ┌─────┐
FINAL REDUCTION RATIO ⟶ │  ×  │
                        │  ÷  │   REVERSE
                        │  ÷  │   CONVERSION
                        └─────┘   UNIT

┌─────────────────────┐
│ GEAR RATIO          │ ⟶
│ CALCULATION UNIT    │
└─────────────────────┘
   15e        15f

┌─────────────────────┐        ┌─────┐
│ INERTIA TORQUE      │ ⟶      │  +  │ ⟶ TARGET
│ CALCULATION UNIT    │        │  +  │   ENGINE TORQUE
└─────────────────────┘        │  +  │
                               └─────┘
┌─────────────────────┐
│ CVT LOSS            │ ⟶
│ CALCULATION UNIT    │
└─────────────────────┘
          15g

TARGET ENGINE
REVOLUTION SPEED

# FIG.8

# FIG.9

# FIG.10

# FIG.11

LOAD COEFFICIENT

ACCELERATOR OPERATION AMOUNT CHANGE RATE

# FIG.12

# FIG.13

# FIG.14

ANGLE CONVERSION UNIT — 14

TARGET ENGINE TORQUE CALCULATION UNIT — 15

BASIC ENGINE TORQUE CALCULATION UNIT — 15A

CONVERSION UNIT — 15B

DRIVE FORCE CORRECTION UNIT — 15C

REVERSE CONVERSION UNIT — 15D

INTERRUPTION INSTRUCTION SIGNAL OUTPUTTING UNIT — 19

TARGET THROTTLE OPENING DEGREE CALCULATION UNIT — 18

BASIC REVOLUTION SPEED CALCULATION UNIT — 11A

REVOLUTION SPEED CORRECTION UNIT — 11B

TARGET GEAR RATIO CALCULATION UNIT — 13

ACCELERATOR OPERATION AMOUNT

VEHICLE SPEED

TARGET ENGINE REVOLUTION SPEED CALCULATION UNIT — 11

EP 2 851 252 B1

# FIG.15

```
                    ┌─────────────────────┐
                    │        START        │
                    └──────────┬──────────┘
                               ↓
        ┌──────────────────────────────────────────┐
        │  CALCULATE INTERSECTION P2 BETWEEN        │ ~S1
        │  CURRENT ENGINE REVOLUTION                │
        │  SPEED N1 AND FUEL CUT CURVE C            │
        └──────────────────────┬───────────────────┘
                               ↓
        ┌──────────────────────────────────────────┐
        │  CALCULATE INTERSECTION P3 BETWEEN        │ ~S2
        │  EQUIVALENT OUTPUT CURVE D OF THE         │
        │  CURRENT OUTPUT POINT P1                  │
        │  AND FUEL CUT CURVE C                     │
        └──────────────────────┬───────────────────┘
                               ↓
        ╱──────────────────────────────────────────╲   S3
       ╱  IS ABSOLUTE DIFFERENCE ΔN BETWEEN          ╲  NO
       ╲  N1 AND N3 EQUAL TO OR SMALLER              ╱ ──→
        ╲ THAN THRESHOLD VALUE D1?                  ╱
         ╲─────────────────────┬───────────────────╱
                               ↓ YES
        ┌──────────────────────────────────────────┐
        │  CALCULATE TARGET TRANSMISSION            │ ~S4
        │  SPEED BASED ON TORQUE DIFFERENCE         │
        │  ΔT BETWEEN P1 AND P2                     │
        └──────────────────────┬───────────────────┘
                               ↓
   NO   ╱──────────────────────────────────────────╲   S5
  ←─────╲  HAS TRANSMISSION SPEED REACHED           ╱
         ╲ TARGET TRANSMISSION SPEED?              ╱
          ╲────────────────────┬──────────────────╱
                               ↓ YES
        ┌──────────────────────────────────────────┐
        │  SET TARGET THROTTLE                      │ ~S6
        │  OPENING DEGREE TO 0                      │
        └──────────────────────┬───────────────────┘
                               ↓
        ╱──────────────────────────────────────────╲   S7
       ╱  HAS TARGET THROTTLE                        ╲  NO
       ╲  OPENING DEGREE REACHED 0?                  ╱
        ╲─────────────────────┬────────────────────╱
                               ↓ YES
        ┌──────────────────────────────────────────┐
        │           EXECUTE FUEL CUT                │ ~S8
        └──────────────────────┬───────────────────┘
                               ↓
        ┌──────────────────────────────────────────┐
        │  CALCULATE TARGET TRANSMISSION            │ ~S9
        │  SPEED BASED ON TORQUE DIFFERENCE         │
        │  ΔT BETWEEN P1 AND P2                     │
        └──────────────────────┬───────────────────┘
                               ↓
   NO   ╱──────────────────────────────────────────╲   S10
  ←─────╲  IS ABSOLUTE DIFFERENCE ΔN BETWEEN         ╱
         ╲ N1 AND N3 EQUAL TO OR LARGER            ╱
          ╲ THAN THRESHOLD VALUE D2?              ╱
           ╲──────────────────┬──────────────────╱
                               ↓ YES
                    ┌─────────────────────┐
                    │         END         │
                    └─────────────────────┘
```

# FIG.16

ENGINE REVOLUTION SPEED

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3754188 B

- US 6148257 A